# EUROPÄISCHE PATENTSCHRIFT

(11) **EP 4 051 991 B1**
(45) Veröffentlichungstag und Bekanntmachung des Hinweises auf die Patenterteilung: **31.05.2023**
(21) Anmeldenummer: 21701112.1
(22) Anmeldetag: 19.01.2021
(51) Int. Cl.: G01D 21/00

(54) **ANORDNUNG UND VERFAHREN ZUR AUSWAHL EINER SENSOR-FUNKMODULEIGENSCHAFT**
ARRANGEMENT AND METHOD FOR SELECTING A SENSOR-RF MODULE PROPERTY
ENSEMBLE ET PROCÉDÉ DE SÉLECTION D'UNE PROPRIÉTÉ DE MODULE CAPTEUR-RF

(43) Veröffentlichungstag der Anmeldung: 07.09.2022
(73) Patentinhaber: VEGA Grieshaber KG, 77709 Wolfach (DE)
(72) Erfinder: WEINZIERLE, Christian, 77709 Wolfach (DE); DIETERLE, Levin, 77709 Oberwolfach (DE)
(74) Vertreter: Maiwald GmbH
(86) Internationale Anmeldenummer: PCT/EP2021/051044
(87) Internationale Veröffentlichungsnummer: WO 2022/156880

(56) Entgegenhaltungen:
- EP-A1- 1 667 082
- EP-A1- 3 179 635
- EP-A1- 3 285 403
- US-A1- 2003 025 612
- US-A1- 2010 273 441
- US-A1- 2013 135 171

## Beschreibung

### Gebiet der Erfindung

Die Erfindung betrifft eine Anordnung, die zur Auswahl einer Funkmoduleigenschaft für einen Sensor der Automatisierungstechnik eingerichtet ist, ein Kommunikationsmodul, einen Sensor, ein Verfahren zur Auswahl einer Funkmoduleigenschaft für einen Sensor, ein Programmelement und eine Verwendung der Anordnung zur Auswahl einer Funkmoduleigenschaft für einen Füllstandsensor, für einen Grenzstandsensor, für einen Durchflusssensor oder für einen Drucksensor.

### Hintergrund der Erfindung

Sensoren in der Prozess- und Automatisierungstechnik weisen je nach Anforderung an mechanische Stabilität, chemische Beständigkeit oder auch UV-Stabilität Gehäuse aus entsprechend geeigneten Materialen auf. Hierbei kann es sich beispielsweise um einen UV-stabilen Kunststoff, Aluminium oder Edelstahl handeln. Will man nun den Funktionsumfang eines solchen Sensors nachträglich mit einem Funk-Kommunikationsmodul erweitern, ergibt sich das technische Problem, dass die Antenne des Funk-Kommunikationsmoduls je nach Material des Sensorsaufbaus, wie zum Beispiel des umgebenden Gehäuses, eine andere Anpassung benötigt.

Die US 2003025612 A1 beschreibt ein drahtloses Endgerät mit Zweiweg-Telemetrie-Interface-Modulen zum Übertragen von Sensordaten. Ein Modul sendet eine Nachricht an das zweite Modul. Erhält es keine Antwort, ändert es seine Sendeleistung. Die EP 1 667 082 A1 beschreibt einen Sensor zur Messung einer Hauttemperatur. Der Sensor weist einen Sender mit einer Antennen-Anpassungsschaltung auf. Es wird ein Stehwellenverhältnis gemessen und die Impedanz entsprechend dieser gesteuert. Die US2010273441 A1 beschreibt eine Antennenanpassung in einem Mobilfunkgerät.

### Offenbarung der Erfindung

Eine Aufgabe der Erfindung könnte sein, eine Vorrichtung bereitzustellen, die eine gute Funkcharakteristik zeigt, die weitgehend unabhängig vom Sensoraufbau ist.

Die Aufgabe wird durch die Gegenstände der unabhängigen Patentansprüche gelöst. Vorteilhafte Ausführungsformen sind Gegenstand der abhängigen Ansprüche, der folgenden Beschreibung, sowie der Figuren.

Die beschriebenen Ausführungsformen betreffen in ähnlicher Weise die Anordnung, die zur Auswahl einer Funkmoduleigenschaft für einen Sensor der Automatisierungstechnik eingerichtet ist, die Verwendung der Anordnung, das Kommunikationsmodul, den Sensor, das Verfahren zur Auswahl einer Funkmoduleigenschaft für den Sensor, und das Programmelement. Synergieeffekte können sich aus verschiedenen Kombinationen der Ausführungsformen ergeben, obwohl sie möglicherweise nicht im Detail beschrieben werden.

Ferner ist zu beachten, dass alle Ausführungsformen der vorliegenden Erfindung, die ein Verfahren betreffen, in der beschriebenen Reihenfolge der Schritte ausgeführt werden können, jedoch muss dies nicht die einzige und wesentliche Reihenfolge der Schritte des Verfahrens sein. Die hier vorgestellten Verfahren können mit einer anderen Reihenfolge der offenbarten Schritte ausgeführt werden, ohne von der jeweiligen Verfahrensausführungsform abzuweichen, sofern im Folgenden nicht ausdrücklich etwas anderes angegeben ist.

Fachbegriffe werden in gewöhnlicher Weise verwendet. Wenn bestimmten Begriffen eine bestimmte Bedeutung zugewiesen wird, werden im Folgenden Definitionen von Begriffen angegeben, in deren Kontext die Begriffe verwendet werden.

Gemäß einem ersten Aspekt wird eine Anordnung für einen Sensor der Automatisierungstechnik bereitgestellt, wobei die Anordnung zur Auswahl einer Funkmoduleigenschaft eingerichtet ist, und wobei die Funkmoduleigenschaft von einem Sensoraufbau abhängt. Die Anordnung weist einen Controller auf, der eingerichtet ist, die Funkmoduleigenschaft gemäß Anspruch 1 auszuwählen.

Die Funkmoduleigenschaft ist hierbei eine funktechnisch relevante Eigenschaft, wie zum Beispiel eine elektrische, elektromagnetische oder allgemein physikalische Eigenschaft. Hierunter sind insbesondere auch spezifische elektrische, elektromagnetische Werte zu verstehen, die sich aus Parametern einer Schaltung, oder der Datenübertragung bzw. Funkübertragung, beispielsweise Parametern einer physikalischen Übertragungsebene, ergeben.

Der Begriff "Funk-Kommunikationsmodul" ist in dieser Offenbarung gleichbedeutend mit dem kürzeren Begriff Funkmodul. Entsprechend bezieht sich der Begriff "Funkmoduleigenschaft" auf das Funkmodul bzw. das Funk-Kommunikationsmodul. Das Funk-Kommunikationsmodul ist ein Sende- und/oder Empfangsmodul des Sensors.

Der Sensoraufbau ist insbesondere durch Parameter, wie beispielsweise seine Form, Größe und Materialeigenschaften gekennzeichnet. Diese mechanischen Parameter können Auswirkungen auf die Qualität der Funkübertragung haben, insbesondere, wenn sich die Antenne innerhalb des Sensors befindet. Der Sensoraufbau kann beispielsweise ein Gehäuse, einen Deckel, ein Glasfenster, das in den Deckel integriert ist und weitere Elemente aufweisen.

Ein Controller kann beispielsweise ein elektronisches Bauelement aufweisen, das eine hartverdrahtete oder programmierbare Logik enthält, oder eine Schaltung aus diskreten elektronischen Bauelementen oder einer Kombination hiervon. Der Controller kann somit Schaltungen ohne programmierbare Logik umfassen oder kann beispielsweise einen Mikrocontroller, ein feldprogrammierbares Gate-Array (FPGA), einen ASIC, eine komplexe programmierbare Logikvorrichtung (CPLD) oder irgendeine andere programmierbare Logikvorrichtung sein oder aufweisen, die dem Fachmann bekannt ist.

Unter Auswahl einer Funkmoduleigenschaft ist die Wahl einer von mehreren zur Verfügung stehenden Funkmoduleigenschaften zu verstehen. Diese kann durch z.B. Ein-, Aus,- oder Umschalten von Bauelementen oder Schaltkreisen realisiert werden. Das Ein-, Aus,- oder Umschalten kann auch das gleichzeitige Schalten mehrerer Bauelemente oder Schaltkreise enthalten, um so die gewünschte Funkmoduleigenschaft zu erreichen. Eine Auswahl kann auch die Wahl einer bestimmten Funkmoduleigenschaft sein, die der Controller, zum Beispiel durch eine digitale oder analoge Ansteuerung eines Abstimmschaltkreises oder eines elektronischen Bauelements einstellt.

Der Begriff Automatisierungstechnik soll hier breit ausgelegt werden und beinhaltet u.a. die Prozessautomation und Fabrikautomation.

Gemäß einer Ausführungsform weist die Anordnung weiterhin einen Empfänger auf, der eingerichtet ist, Werte einer Sensor-externen Signalstärkenmessung eines von der Anordnung gesendeten Signals zu empfangen, und der Controller ist eingerichtet, die Funkmoduleigenschaft anhand der empfangenen Werte auszuwählen. Der Empfänger kann beispielsweise ein Empfänger sein, der bereits zum Empfang von Daten wie beispielsweise Steuerdaten oder Konfigurationsdaten für den Sensor vorgesehen ist.

In anderen Worten sendet das Funkmodul, für das der Controller die Funkmoduleigenschaft auswählt, ein Signal, das beispielsweise Datenpakete enthalten kann, an ein Empfangsgerät außerhalb des Sensors. Das Empfangsgerät misst einen oder mehrere Empfangsparameter wie beispielsweise eine Empfangsstärke oder ein empfangenes Signal-zu-Rauschverhältnis und sendet das Messergebnis an den Sensor zurück. Gemäß der Ausführungsform weist nun die Anordnung einen Empfänger auf, der eingerichtet ist, das Messergebnis von dem externen Gerät zu empfangen. Der Controller ist eingerichtet, das Messergebnis auszuwerten, und entsprechend dem Auswerteergebnis die Funkmoduleigenschaft auszuwählen. Dies kann beispielsweise auch über einen iterativen Prozess erfolgen.

In einem Beispiel stehen zwei auswählbare Funkmoduleigenschaften A und B zur Verfügung. Der Controller veranlasst den Sensor, ein Signal unter der Funkmoduleigenschaften A zu senden, worauf der Empfänger im Sensor ein Messergebnis, z.B. ein Signalstärkewert, zurückerhält, das er an den Controller übergibt. Der Controller kann den Wert nun beispielsweise mit einem vorgegebenen Signalstärkewert vergleichen und z.B. bei Unterschreiten eines Schwellwerts für die weitere Betriebszeit des Sensors die Funkmoduleigenschaften B festlegen, bzw. schalten.

In einem weiteren Beispiel veranlasst der Controller den Sensor, zunächst ein Signal unter der Funkmoduleigenschaften A zu senden und danach ein Signal unter der Funkmoduleigenschaften B zu senden. Der Empfänger im Sensor erhält beide Messergebnisse, so dass der Controller die beiden Messergebnisse miteinander vergleichen kann und die Funkmoduleigenschaften auswählt, die einen besseres Messergebnis, z.B. einen höheren Signalstärkewert geliefert hat.

Gemäß einer Ausführungsform weist die Anordnung mindestens einen Schalter auf, wobei in jeder Schalterstellung ein unterschiedlicher die Funkmoduleigenschaft bestimmender Schaltkreis aktiv ist, und der Controller eingerichtet ist, die Funkmoduleigenschaft durch ein Umschalten des Schalters zu bewirken. Der Schaltkreis kann zum Beispiel ein Antennenschaltkreis oder ein Frequenzschaltkreis sein.

Gemäß einer Ausführungsform ist der Schaltkreis, bzw. sind die Schaltkreise Netzwerke zur Anpassung der Antennenimpedanz.

Das heißt, in diesem Fall ist die Funkmoduleigenschaft eine Eigenschaft, die einer angepassten Impedanz der Antennenansteuerung entspricht. Zum Beispiel benötigt die Antenne je nach umgebendem Gehäuse eine andere Anpassung, d.h., die Impedanz des Funkmoduls muss entsprechend dem Gehäusematerial derart gewählt werden, dass die Impedanz der Antenne in dieser Umgebung der Impedanz der Schaltung, die das Hochfrequenzsignal liefert, angepasst ist. Hierzu gibt es, in einem Beispiel, ein erstes Anpassungsnetzwerk, das diese Antennenimpedanz bei einem Kunststoffgehäuse an den Hochfrequenzschaltkreis anpasst, sowie ein zweites Anpassungsnetzwerk, das diese Antennenimpedanz bei einem Edelstahlgehäuse an den Hochfrequenzschaltkreis anpasst, und ein drittes Anpassungsnetzwerk, das diese Antennenimpedanz bei einem Aluminiumgehäuse an den Hochfrequenzschaltkreis anpasst. Nach einer Ermittlung der besten Signalqualität, Sende- oder Empfangsleistung oder der Art des Gehäuses, entsprechend dem Gehäusematerial, wird ein Anpassungsnetzwerk ausgewählt und der Eingang des Anpassungsnetzwerks durch z.B. einen Schalter mit Hochfrequenzschaltkreis verbunden und der Ausgang des Anpassungsnetzwerks mit der Antenne. Der Schalter bewirkt z.B. ein Umschalten, so dass gleichzeitig die anderen Anpassungsnetzwerke eingangs- und ausgangsseitig von dem Hochfrequenzpfad bzw. der Antenne getrennt werden.

Gemäß einer Ausführungsform ist die Anordnung eingerichtet, die Funkmoduleigenschaft durch Ändern von Werten eines oder mehrerer elektronischer Bauelemente zu erreichen. Beispielweise kann in einem Anpassungsnetzwerk anstelle des Umschaltens von einem kompletten Anpassungsnetzwerk zu einem anderen Anpassungsnetzwerk eine Anzapfung einer Spule, eines Widerstands oder eines Kondensators gewählt werden, so dass sich der entsprechende Wert dieses Bauteils ändert und damit auch die Impedanz des Anpassungsnetzwerks. Entsprechend könnten auch eine Frequenz, eine Frequenzfiltercharakteristik oder andere relevante Parameter geändert werden.

Erfindungsgemäß ist der Sensoraufbau durch ein Gehäusematerial charakterisiert. Sensoren in der Prozess- und Automatisierungstechnik weisen je nach Anforderung an mechanische Stabilität, chemische Beständigkeit oder auch UV-Stabilität Gehäuse aus entsprechend geeigneten Materialen auf. Hierbei kann es sich beispielsweise um einen UV-stabilen Kunststoff, Aluminium oder Edelstahl handeln.

Der Sensoraufbau kann variabel sein. Insbesondere kann das Gehäuse gewechselt werden.

Beispielsweise hat das Gehäuse bzw. der Rahmen des Sensors ein Gewinde, so dass das Gehäuse, z.B. ein Plastikgehäuse von dem Sensor entfernt werden kann und ein anderes Gehäuse, z.B. ein Metallgehäuse, aufgeschraubt werden kann. Das Material, bzw. die Art des eingesetzten Gehäuses kann zum Beispiel von der Einsatzumgebung und der Anwendung abhängen. Beispielsweise kann eine chemische Umgebung ungeeignet für Kunststoff sein, oder ein Kunststoffgehäuse kann wirtschaftlicher sein, muss aber eventuell Bedingungen wie UV-Stabilität erfüllen.

Erfindungsgemäß ist die Anordnung eingerichtet, eine elektrische Eigenschaft des Gehäusematerials zu bestimmen. Somit weist die Anordnung zusätzlich oder alternativ zu dem oben beschriebenen Messwert-Empfänger einen Schaltkreis auf, der eine elektrische Eigenschaft des Gehäuses misst und ein digitales oder analoges Mess-Signal an den Controller schickt, so dass dieser das Signal oder die Daten auswerten kann und die Funkmoduleigenschaft auswählen kann.

Gemäß einer Ausführungsform ist die elektrische Eigenschaft eine Kapazität und/oder eine Leitfähigkeit. Das heißt, um bei obigem Beispiel zu bleiben, dass die Anordnung einen Schaltkreis aufweisen kann, der die Kapazität oder die Leitfähigkeit, bzw. einen Widerstand als elektrische Eigenschaft misst, wobei die Kapazität bzw. die Leitfähigkeit charakteristisch für einen Sensoraufbau, wie z.B. ein Gehäuse oder ein Gehäusematerial ist, und der Controller die Funkmoduleigenschaft, wie z.B. die Impedanz oder andere hier beschriebene Parameter z.B. durch einen Schalter auswählt.

Gemäß einer Ausführungsform ist der Controller eingerichtet, das Gehäusematerial und/oder die elektrischen Eigenschaften von einer Datenbank, einer gespeicherten Konfiguration und/oder einer empfangenen Konfiguration abzufragen. Bevorzugt wird eine aus diesen Möglichkeiten gewählt, es kann jedoch auch jede Permutation hieraus zur Anwendung kommen. Beispielsweise fragt der Controller das Gehäusematerial aus einem Speichermodul ab, wobei der Speicher ein flüchtiger oder ein nichtflüchtiger Speicher ist. Die Konfiguration kann beispielsweise für den Sensor fest implementiert sein oder über z.B. eine Funkverbindung übertragen und in dem Speicher gespeichert werden. Der Speicher kann sich beispielsweise in der Anordnung oder einer anderen Elektronikeinheit des Sensors befinden. Die Konfiguration kann weiterhin über eine manuelle Eingabe erzielt werden. Alternativ veranlasst der Controller über beispielsweise eine Funkverbindung zu einem Server eine Datenbankabfrage. Hierzu kann die Logik des Controllers zum Beispiel eine Client-Software aufweisen.

Gemäß einer Ausführungsform ist die Funkmoduleigenschaft eine abgestrahlte Energie. So kann beispielsweise der Controller durch ein von einem externen Gerät empfangenes Messergebnis oder durch eine Ermittlung des Gehäusematerials oder von elektrischen Eigenschaften des Gehäuses zu der Entscheidung gelangen, dass die Energie für die Übertragung von Daten erhöht werden muss.

Diese Ausführungsform kann generell angewendet werden oder zum Beispiel dann zum Tragen kommen, wenn festgestellt wird, dass trotz anderweitiger Anpassungen die Qualität oder die Leistung aufgrund des Sensoraufbaus nicht ausreicht, um Daten ausreichend fehlerfrei übertragen zu können.

Die abgestrahlte Energie beispielsweise durch eine Sendestärke oder eine Datenrate definiert. Die Sendestärke oder Sendeleistung beeinflusst direkt die abgestrahlte Hochfrequenzenergie. Ist die Sendeleistung fest und daher nicht veränderbar, kann beispielsweise auch die Datenrate verringert werden. Die Datenrate beeinflusst beispielsweise die Energie pro Bit und ist bei der Decodierung der Daten maßgebend. Es sei hier nochmals darauf hingewiesen, dass unter Funkmoduleigenschaft, wie eingangs erwähnt, auch der Wert eines Parameters wie die Impedanz, die Sendeleistung oder die Datenrate sein kann.

Gemäß einer Ausführungsform ist die Funkmoduleigenschaft eine Modulation, ein Funkstandard und/oder eine Frequenz. Die elektrischen Eigenschaften des Gehäuses können zur Folge haben, dass z.B. das Signal verzerrt wird und die Modulationsart keine fehlerfreie Dekodierung mehr erlaubt, so dass diese gewechselt werden muss. Entsprechend könnte auch das Kodierverfahren gewechselt werden, beispielsweise um eine höhere Redundanz und/oder verbesserte Fehlererkennung und/oder Fehlerkorrektur zu erreichen. Eine Signalverzerrung kann beispielsweise durch Interferenzen entstehen, die z.B. durch Reflexionen im Zusammenhang mit z.B. dem Gehäuse oder dessen Durchlässigkeit von unerwünschten elektromagnetischen Wellen entstehen. Die Auswahl der Modulation, des Kodierverfahrens und des Funkstandards setzt voraus, dass geeignete Alternativen verfügbar sind und durch den eingesetzten Funkstandard möglich sind. Beispielsweise ist ein geeigneter Funkstandard ein LoRa, LoRaWAN, NB-IOT, Cat-M1, Sigfox, Mioty, Bluetooth oder ein vergleichbarer Standard.

In einem Beispiel weist die Anordnung eine Benutzerschnittstelle wie zum Beispiel einen manuellen Schalter, einen berührungsempfindlichen Bildschirm, einen Taster oder eine externe drahtgebundene oder drahtlose Schnittstelle, wie z.B. eine Bluetooth-, NFC-, WLAN- oder Mobilfunkschnittstelle zu einem Smartphone, einem Laptop oder einem Tablet auf, über die eine Eingabe zur Auswahl der Funkmoduleigenschaft getroffen werden kann.

Gemäß einem weiteren Aspekt wird ein Kommunikationsmodul mit einer hierin beschriebenen Anordnung bereitgestellt, wobei das Kommunikationsmodul weiterhin eine Antenne und ein Funkmodul aufweist, wobei die Antenne mit dem Funkmodul verbunden ist, und wobei das Funkmodul eingerichtet ist, vom Controller der Anordnung eine vom Controller ausgewählte Funkmoduleigenschaft zu erhalten. Das Funkmodul kann eingerichtet sein, Datenpakete an einen externen Empfänger zu senden, so dass dieser z.B. die Signalstärke messen kann und das Messergebnis wieder an den Sensor bzw. einen Empfänger im Kommunikationsmodul senden kann. In einem Beispiel ist die Antenne schaltbar über ein erstes Netzwerk oder ein zweites Netzwerk zur Anpassung der Antennenimpedanz mit dem Funkmodul verbunden.

Gemäß einem weiteren Aspekt wird ein Sensor bereitgestellt, der ein Kommunikationsmodul mit einer Anordnung zur Auswahl einer Funkmoduleigenschaft, wie in dieser Offenbarung beschrieben, aufweist. Der Sensor weist weiterhin z.B. einen Aufbau mit einem Gehäuse auf, von welchem die Auswahl der Funkmoduleigenschaft abhängt. Das Gehäuse kann dabei aus Metall wie Edelstahl oder Aluminium, einem Kunststoff oder einem anderen Material bestehen.

Gemäß einem weiteren Aspekt wird ein Verfahren zur Auswahl einer Funkmoduleigenschaft für einen Sensor der Automatisierungstechnik bereitgestellt, wobei die Funkmoduleigenschaft von einem Sensoraufbau abhängt, und wobei der Controller die Funkmoduleigenschaft entsprechend Anspruch 12 auswählt.

In einem Beispiel weist das Verfahren folgende Schritte auf:
Ermitteln eines Sensoraufbaus, z.B. einer Gehäuseart, Auswählen einer Funkmoduleigenschaft, zum Beispiel einer Antennennetzwerkimpedanz, einer Frequenz, einer Modulationsart oder eines Funkstandards, und Schalten eines elektronischen Bauelements, Schaltkreises wie z. B. eines Antennenanpassungsnetzwerks zur Anpassung der Impedanz und/oder eines Funkstandards, etc., so dass die ausgewählte Funkmoduleigenschaft in Effekt tritt. Das Ermitteln eines Sensoraufbaus erfolgt durch eine Ermittlung von elektrischen Eigenschaften des Gehäuses beispielsweise eine Messung der Gehäusekapazität oder Gehäuseleitfähigkeit. Das Ermitteln eines Sensoraufbaus kann zusätzlich durch das Empfangen eines Messergebnisses erfolgen, dem ein Senden eines Signals durch den Sensor vorausgeht. In letzterem Fall muss der Sensoraufbau nicht explizit ermittelt werden. Es genügt festzustellen, ob die aktuelle Funkmoduleigenschaft für den aktuellen Sensoraufbau geeignet ist bzw. welche der ausprobierten Funkmoduleigenschaften die Geeignetste ist. Die Schritte werden von dem Controller gesteuert, sowie zumindest zum Teil vom Controller selbst ausgeführt, wie oben und in den Ausführungsbeispielen beschrieben.

Gemäß einem Aspekt wird ein Programmelement, z.B. ein Computerprogrammelement, bereitgestellt, das, wenn es auf dem Controller der Anordnung ausgeführt wird, die Schritte des Verfahrens durchführt. Das Programmelement kann Teil eines Computerprogramms sein, es kann jedoch auch ein ganzes Programm für sich sein. Beispielsweise kann das Programmelement verwendet werden, um ein bereits vorhandenes Computerprogramm zu aktualisieren, um zur vorliegenden Erfindung zu gelangen.

Das Programmelement kann auf einem bereitgestellten computerlesbares Medium gespeichert sein. Das computerlesbare Medium kann als ein Speichermedium angesehen werden, wie beispielsweise ein Speicherbaustein, ein USB-Stick, eine CD, eine DVD, ein Datenspeichergerät, eine Festplatte oder ein beliebiges anderes Medium, auf dem sich ein Programmelement wie oben beschrieben befinden kann.

Gemäß einem weiteren Aspekt wird eine Verwendung einer hierin beschriebenen Anordnung zur Auswahl einer Funkmoduleigenschaft für einen Füllstandsensor, einen Grenzstandsensor, einen Durchflusssensor oder einen Drucksensor bereitgestellt.

### Kurze Beschreibung der Zeichnungen

Im Folgenden werden Ausführungsbeispiele der Erfindung anhand der schematischen Zeichnungen näher erläutert. Hierbei zeigt
- Fig. 1: ein schematisches Diagramm eines Sensors mit einer Anordnung zur Auswahl einer Funkmoduleigenschaft,
- Fig. 2: ein Blockdiagramm eines Funk-Kommunikationsmoduls,
- Fig. 3: ein Ablaufdiagramm eines Verfahrens zur Auswahl einer Funkmoduleigenschaft für einen Sensor der Automatisierungstechnik,
- Fig. 4: eine Skizze mit einer Anordnung für eine kapazitive Ermittlung des Gehäusematerials.

### Ausführungsbeispiele

Einander entsprechende Teile sind in allen Figuren mit den gleichen Bezugszeichen versehen. Die Erfindung wird in erster Linie anhand eines Ausführungsbeispiels erklärt, bei dem ein Antennen-Anpassnetzwerk ausgewählt und geschaltet wird, wobei die Auswahl entsprechend dem Gehäusematerial erfolgt, welches in einer Form ermittelt wird. Dieses Beispiel schränkt die Erfindung jedoch nicht ein.

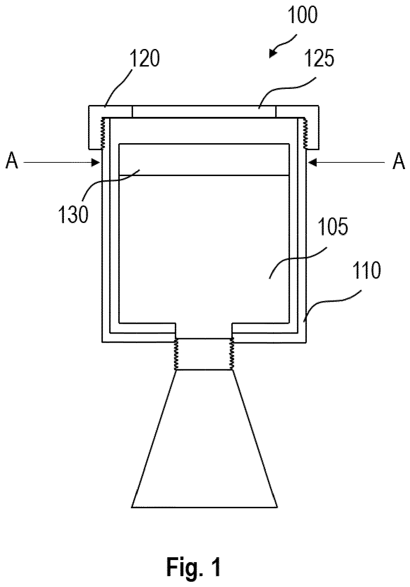

Fig. 1 zeigt schematisch einen industriellen Sensor 100 der Automatisierungstechnik, welcher aus einer Elektronikeinheit 105, einem Sensorgehäuse 110, welches beispielsweise aus Kunststoff, Aluminium oder auch Edelstahl besteht, und einem abschraubbaren Gehäusedeckel 120, welcher im Normalfall aus dem gleichen Material wie das Sensorgehäuse 110 besteht. Das Kommunikationsmodul 130 kann nachträglich eingebaut werden und beinhaltet eine Anordnung zur Auswahl einer Funkmoduleigenschaft eines Funkmoduls des Kommunikationsmoduls 130. Im Falle eines metallischen Gehäuses 110 kann im Deckel 120 beispielsweise ein Glassichtfenster 125 vorgesehen sein, um das Absenden von Daten durch das ergänzende Kommunikationsmodul 130 aus dem Sensorgehäuse 110 heraus zu ermöglichen.

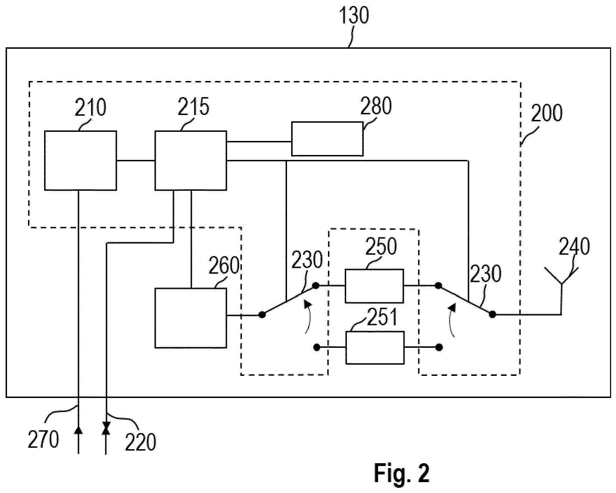

Fig. 2 zeigt in einem Ausführungsbeispiel ein Blockdiagramm des den Sensor ergänzenden Funk-Kommunikationsmoduls 130 mit einer Anordnung 200 zur Auswahl einer Funkmoduleigenschaft, einem Funkmodul 260, einer Antenne 240, und zwei Anpassnetzwerken 250 und 251 zur Anpassung der Impedanz für die Antenne 240. Die Antenne 240 ist in Fig. 2 über das Anpassnetzwerk 250 mit dem Funkmodul 60 verbunden. Das Modul bezieht seine Energie 270 aus der in Fig. 1 gezeigten Sensorelektronik 105, welche in einem Energiepuffer 210, beispielsweise einem Akku oder einem Kondensator, zwischengespeichert, bzw. gesammelt werden kann. Aus diesem Energiepuffer 210 beziehen alle Komponenten des Kommunikationsmoduls 130 ihre Energie. Der Mikrocontroller 215 regelt zum einen die Kommunikation 220 mit der Sensorelektronik 105 und bereitet die zu sendenden Daten auf. Des Weiteren steuert dieser in diesem Beispiel die Anpassung der Sendeantenne 240 an das Funkmodul 260.

Abhängig von der Einbausituation, d.h., dem Sensoraufbau 110, 120, 125, kann der Mikrocontroller 215 auf ein entsprechendes Anpassnetzwerk 250 und 251 zur Anpassung der Impedanz für die Antenne 240 umschalten. Die mindestens zwei Antennen-Anpassnetzwerke 250, 251 sind wie hier gezeigt diskret aufgebaut. Alternativ kann es sich um ein einziges Antennen-Anpassnetzwerk handeln, welches elektronisch abstimmbar ist.

Die Anordnung 200 kann zur Ermittlung des Sensoraufbaus weiterhin ein Modul 280 aufweisen, bei dem es sich beispielsweise um einen Empfänger handeln kann, der ein Messergebnis eines externen Sensors empfangen kann. Das Messergebnis zeigt zum Beispiel eine Signalstärke oder ein Signal-zu-Rauschverhältnis an, mit der bzw. dem der externe Empfänger ein vom Kommunikationsmodul 130 über die Antenne 240 abgestrahltes Signal empfangen hat. Das Modul 280 kann weiterhin eine Speichereinheit sein, aus der der Controller einen oder mehrere Werte auslesen kann, die auf die Gehäuseeigenschaft bezogen sind und indikativ für beispielsweise eine Gehäusematerial sind, so dass der Controller beispielsweise entscheiden kann, welches Anpassnetzwerk 250, 251 er auswählt. Das Modul 280 kann weiterhin ein Benutzerinterface sein, so dass der Benutzer die Gehäuseeigenschaft eingeben kann, oder ein Client zum Empfangen entsprechender Konfigurationsdaten von einem externen Server und/oder einer Datenbank und/oder einem Smartphone. Das Modul kann auch ein Sensor sein oder eine Schaltung sein, der bzw. die beispielsweise die elektrischen Eigenschaften wie Kapazität oder Leitfähigkeit des Gehäuses ermittelt. Das Modul 280 kann auch eine Schnittstelle zu einem Speicher der Elektronikeinheit 105 sein, der hierüber ausgelesen wird, und in welchem entsprechende Sensoraufbaudaten gespeichert sind. In einem sehr einfachen Fall genügt ein Bit oder ein Flag, um beispielsweise "metallisch" und "nicht-metallisch" für eine Gehäuseeigenschaft anzugeben.

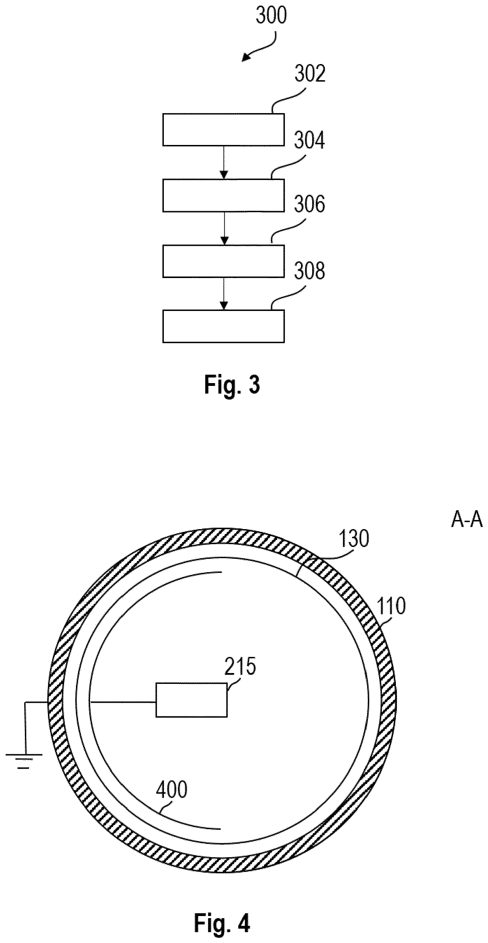

Fig. 3 zeigt ein entsprechendes Verfahren 300 zur Auswahl einer Funkmoduleigenschaft für einen Sensor 100 der Automatisierungstechnik, beispielsweise zur Anpassung der Antenne 240 des Funk-Kommunikationsmoduls 130 an das Gehäuse des Sensors. Im ersten Schritt 302 wird das Funk-Kommunikationsmodul 130 auf das Elektronikmodul 105 des Sensors 100 aufgesetzt. Dies kann beispielsweise mittels eines Schraub-, Steck- oder Schnappmechanismus erfolgen. In einem weiteren Schritt 304 erfolgt die Stromversorgung des Funk-Kommunikationsmoduls 130 über das Elektronikmodul 105 des Sensors. Die Ermittlung, ob das Funk-Kommunikationsmodul 130 in einem Metall- oder Kunststoffgehäuse eingebaut ist, erfolgt im Schritt 306 und kann mittels unterschiedliche Verfahren erfolgen.

Das ergänzende Funk-Kommunikationsmodul 130 kann beispielsweise mindestens zwei Datenpakete mit unterschiedlicher Anpassung der Antenne 240 abschicken. Über die ermittelte Empfangssignalstärke (Received Signal Strength Indicator, RSSI) an einem Empfänger, beispielsweise einem LoRa Gateway, oder dem gemessenen Signal-Rausch-Verhältnis (Signal-to-Noise Ratio, SNR) kann die Güte der jeweiligen Anpassung qualitativ bestimmt und mittels bidirektionaler Kommunikation dem Kommunikationsmodul 130 mitgeteilt werden. Die Antennenanpassung, mit der eine höhere Empfangssignalstärke oder ein besseres Signal-Rausch-Verhältnis erreicht worden ist, wird für die zukünftige Kommunikation beibehalten, solange das Kommunikationsmodul mit Strom versorgt wird. Alternativ kann die Einbausituation sensorisch mittels einer kapazitiven Messung durch die Anordnung 200 selbst erfasst werden, z.B. dem Modul 280 der Anordnung 200.

In einem weiteren Ausführungsbeispiel kann die Anordnung 200 den Sensoraufbau, wie z.B. Einbausituation, Einbauart oder Material des Gehäuses über einen Parameter von der Sensorelektronik 105 auslesen. In einem weiteren Ausführungsbeispiel kann die Anordnung 200 die Einbausituation über eine Datenbank über die Seriennummer der Sensorelektronik 105 abfragen. In noch einem weiteren Ausführungsbeispiel wird der Sensoraufbau der Anordnung 200 mittels einer manuellen Eingabe mitgeteilt.

Im Schritt 308 wird die entsprechende Antennenanpassung des Funk-Kommunikationsmodules 130 beibehalten, solange die Stromversorgung nicht unterbrochen bzw. getrennt wird. In diesem Falle ist davon auszugehen, dass das Modul 130 in einen anderen Sensor mit eventuell anderem Gehäusematerial eingebaut worden ist und somit die Antennenanpassung erneut bestimmt werden muss.

Fig. 4 zeigt ein Ausführungsbeispiel mit einer Anordnung, die eine kapazitive Ermittlung der Art des Sensorgehäusemateriales ermöglicht. Es ist ein Schnitt durch das Kommunikationsmodul 130 und das Sensorgehäuse 110 gemäß der in Fig. 1 markierten Schnittebene A gezeigt. Hierzu wird die Kapazität zwischen dem Sensorgehäuse 110 und einer im Kommunikationsmodul 130 befindlichen Gegenelektrode 400 ermittelt. Im einfachsten Fall kann dies über einen Port-Pin des Mikrocontrollers 215 erfolgen. Ist das Kommunikationsmodul 130 in ein geerdetes, metallisches Gehäuse eingebaut, ist die so gemessene Kapazität im Vergleich zu einem Kunststoffgehäuse um ein vielfaches höher. Anhand der gemessenen Kapazität kann der Mikrocontroller das Anpassungsnetzwerk entsprechend dem vorliegenden Gehäuse einstellen.

In den Ansprüchen schließt das Wort "umfassend" andere Elemente oder Schritte nicht aus, und der unbestimmte Artikel "ein" oder "eine" schließt eine Vielzahl nicht aus. Ein einzelner Prozessor oder eine andere Einheit kann die Funktionen mehrerer Gegenstände oder Schritte erfüllen, die in den Ansprüchen aufgeführt sind. Die bloße Tatsache, dass bestimmte Maßnahmen in voneinander abhängigen Ansprüchen angegeben sind, bedeutet nicht, dass eine Kombination dieser Maßnahmen nicht vorteilhaft genutzt werden kann. Ein Computerprogramm kann auf einem geeigneten Medium wie einem optischen Speichermedium oder einem Halbleitermedium, das zusammen mit oder als Teil einer anderen Hardware geliefert wird, gespeichert / verteilt werden, kann aber auch in anderen Formen, beispielsweise über das Internet oder andere drahtgebundene oder drahtlose Telekommunikationssysteme verteilt sein. Bezugszeichen in den Ansprüchen sollten nicht so ausgelegt werden, dass sie den Umfang der Ansprüche begrenzen. Die vorliegende Erfindung wird durch den Schutzumfang der Ansprüche definiert.

## Patentansprüche

1. Anordnung (200), eingerichtet zur Auswahl einer Funkmoduleigenschaft für einen Sensor (100) der Automatisierungstechnik; aufweisend einen Controller (215); wobei
die Funkmoduleigenschaft von einem Sensoraufbau abhängt;
der Controller (215) eingerichtet ist, entsprechend dem Sensoraufbau (110, 120, 125) die Funkmoduleigenschaft auszuwählen;
der Sensoraufbau (110, 120, 125) durch ein Gehäusematerial charakterisiert ist; und wobei
der Controller (215) eingerichtet ist, eine elektrische Eigenschaft des Gehäusematerials zu bestimmen, um die Funkmoduleigenschaft auszuwählen.

2. Anordnung (200) nach Anspruch 1, wobei die Anordnung weiterhin einen Empfänger aufweist, der eingerichtet ist, Werte einer Sensor-externen Signalstärkenmessung eines von der Anordnung gesendeten Signals zu empfangen, und wobei der Controller eingerichtet ist, die Funkmoduleigenschaft anhand der empfangenen Werte auszuwählen.

3. Anordnung (200) nach Anspruch 1 oder 2, wobei die Anordnung weiterhin mindestens einen Schalter (230) aufweist, wobei in jeder Schalterstellung ein unterschiedlicher die Funkmoduleigenschaft bestimmender Schaltkreis (250, 251) aktiv ist, und der Controller (215) eingerichtet ist, die Funkmoduleigenschaft durch ein Umschalten des Schalters (230) zu bewirken.

4. Anordnung (200) nach Anspruch 3, wobei der die Funkmoduleigenschaft bestimmende Schaltkreis (250, 251) ein Netzwerk zur Anpassung der Antennenimpedanz ist.

5. Anordnung (200) nach einem der vorhergehenden Ansprüche, wobei die Anordnung (200) eingerichtet ist, die Funkmoduleigenschaft durch Ändern von Werten eines oder mehrerer elektronischer Bauelemente zu erreichen.

6. Anordnung (200) nach einem der vorhergehenden Ansprüche, wobei die elektrische Eigenschaft eine Kapazität und/oder eine Leitfähigkeit ist.

7. Anordnung (200) nach einem der vorhergehenden Ansprüche, wobei der Controller (215) eingerichtet ist, das Gehäusematerial und/oder die elektrischen Eigenschaften von einer Datenbank, einer gespeicherten Konfiguration und/oder einer empfangenen Konfiguration abzufragen.

8. Anordnung (200) nach einem der vorhergehenden Ansprüche, wobei die Funkmoduleigenschaft eine abgestrahlte Energie ist.

9. Anordnung (200) nach einem der vorhergehenden Ansprüche, wobei die Funkmoduleigenschaft eine Modulation, ein Funkstandard und/oder eine Frequenz ist.

10. Kommunikationsmodul (130) mit einer Anordnung nach einem der vorhergehenden Ansprüche, wobei das Kommunikationsmodul weiterhin eine Antenne (240) und ein Funkmodul (260) aufweist, wobei die Antenne (240) mit dem Funkmodul (260) verbunden ist, und wobei das Funkmodul (260) eingerichtet ist, vom Controller (215) der Anordnung (200) eine vom Controller (215) ausgewählte Funkmoduleigenschaft zu erhalten.

11. Sensor (100), aufweisend ein Kommunikationsmodul (130) nach dem vorhergehenden Anspruch, wobei der Sensor (100) weiterhin einen Sensoraufbau (110, 120, 125) aufweist, welcher durch ein Gehäusematerial charakterisiert ist, von welchem die Auswahl der Funkmoduleigenschaft abhängt

12. Verfahren (300) zur Auswahl einer Funkmoduleigenschaft für einen Sensor (100) der Automatisierungstechnik nach dem vorhergehenden Anspruch, wobei die Funkmoduleigenschaft von einem Sensoraufbau (110, 120, 125) abhängt, wobei der Controller (215) die Funkmoduleigenschaft entsprechend dem Sensoraufbau (110, 120, 125) auswählt (306), der Sensoraufbau (110, 120, 125) durch ein Gehäusematerial charakterisiert ist; und wobei der Controller (215) eine elektrische Eigenschaft des Gehäusematerials bestimmt um die Funkmoduleigenschaft auszuwählen.

13. Programmelement, das, wenn es auf dem Controller (215) der Anordnung nach einem der Ansprüche 1 bis 9 ausgeführt wird, die Schritte des Verfahrens nach Anspruch 12 durchführt.

14. Verwendung einer Anordnung nach einem der Ansprüche 1 bis 9 zur Auswahl einer Funkmoduleigenschaft für einen Füllstandsensor, einen Grenzstandsensor, einen Durchflusssensor oder einen Drucksensor.

## Claims

1. An arrangement (200) adapted to select a radio module property for an automation sensor (100); comprising a controller (215); wherein
the radio module property depends on a sensor structure;
the controller (215) is arranged to select the radio module property according to the sensor structure (110, 120, 125);
the sensor structure (110, 120, 125) is **characterized by** a housing material; and wherein
the controller (215) is adapted to determine an electrical property of the housing material to select the radio module property.

2. The arrangement (200) of claim 1, wherein the arrangement further comprises a receiver configured to receive values of a sensor-external signal strength measurement of a signal transmitted by the arrangement, and wherein the controller is configured to select the radio module property based on the received values.

3. The arrangement (200) according to claim 1 or 2, wherein the arrangement further comprises at least one switch (230), wherein in each switch position a different circuit (250, 251) determining the radio module property is active, and the controller (215) is arranged to effect the radio module property by switching the switch (230).

4. The arrangement (200) according to claim 3, wherein the radio module characteristic determining circuit (250, 251) is an antenna impedance matching network.

5. The arrangement (200) according to any one of the preceding claims, wherein the arrangement (200) is arranged to achieve the radio module property by changing values of one or more electronic components.

6. The arrangement (200) according to any one of the preceding claims, wherein the electrical property is a capacitance and/or a conductivity.

7. The arrangement (200) according to any one of the preceding claims, wherein the controller (215) is arranged to query the housing material and/or electrical properties from a database, a stored configuration and/or a received configuration.

8. The arrangement (200) according to any one of the preceding claims, wherein the radio module property is a radiated energy.

9. The arrangement (200) according to any one of the preceding claims, wherein the radio module property is a modulation, a radio standard and/or a frequency.

10. A communication module (130) comprising an arrangement according to any one of the preceding claims, wherein the communication module further comprises an antenna (240) and a radio module (260), wherein the antenna (240) is connected to the radio module (260), and wherein the radio module (260) is adapted to receive from the controller (215) of the arrangement (200) a radio module property selected by the controller (215).

11. A sensor (100) comprising a communication module (130) according to the preceding claim, wherein the sensor (100) further comprises a sensor structure (110, 120, 125) **characterized by** a housing material on which the selection of the radio module property depends.

12. A method (300) for selecting a radio module property for an automation sensor (100) according to the preceding claim, wherein the radio module property depends on a sensor structure (110, 120, 125), wherein the controller (215) selects (306) the radio module property corresponding to the sensor structure (110, 120, 125), the sensor structure (110, 120, 125) is **characterized by** a housing material; and wherein the controller (215) determines an electrical property of the housing material to select the radio module property.

13. A program element that, when executed on the controller (215) of the arrangement of any one of claims 1 to 9, performs the steps of the method of claim 12.

14. Use of an arrangement according to any one of claims 1 to 9 for selecting a radio module property for a level sensor, a level limit sensor, a flow sensor, or a pressure sensor.

## Revendications

1. Ensemble (200), configuré pour sélectionner une propriété de module radio pour un capteur (100) de la technique d'automatisation, présentant un contrôleur (215) ; dans lequel
la propriété de module radio dépend d'une structure de capteur ;
le contrôleur (215) est configuré pour sélectionner la propriété de module radio en fonction de la structure de capteur (110, 120, 125) ;
la structure de capteur (110, 120, 125) est **caractérisée par** un matériau de boîtier ; et dans lequel le contrôleur (215) est configuré pour déterminer une propriété électrique du matériau de boîtier afin de sélectionner la propriété de module radio.

2. Ensemble (200) selon la revendication 1, dans lequel l'ensemble présente en outre un récepteur configuré pour recevoir des valeurs d'une mesure d'intensité de signal externe au capteur d'un signal émis par l'ensemble, et dans lequel le contrôleur est configuré pour sélectionner la propriété de module radio à partir des valeurs reçues.

3. Ensemble (200) selon la revendication 1 ou 2, dans lequel l'ensemble présente en outre au moins un commutateur (230), dans lequel un circuit (250, 251) différent déterminant la propriété de module radio est actif dans chaque position du commutateur, et le contrôleur (215) est configuré pour produire la propriété de module radio par une commutation du commutateur (230).

4. Ensemble (200) selon la revendication 3, dans lequel le circuit (250, 251) déterminant la propriété de module radio est un réseau d'adaptation de l'impédance d'antenne.

5. Ensemble (200) selon l'une des revendications précédentes, dans lequel l'ensemble (200) est configuré pour atteindre la propriété de module radio en modifiant les valeurs d'un ou plusieurs composants électroniques.

6. Ensemble (200) selon l'une des revendications précédentes, dans lequel la propriété électrique est une capacité et/ou une conductivité.

7. Ensemble (200) selon l'une des revendications précédentes, dans lequel le contrôleur (215) est configuré pour obtenir le matériau de boîtier et/ou les propriétés électriques à partir d'une base de données, d'une configuration mémorisée et/ou d'une configuration reçue.

8. Ensemble (200) selon l'une des revendications précédentes, dans lequel la propriété de module radio est une énergie rayonnée.

9. Ensemble (200) selon l'une des revendications précédentes, dans lequel la propriété de module radio est une modulation, une norme radio et/ou une fréquence.

10. Module de communication (130) comprenant un ensemble selon l'une des revendications précédentes, dans lequel le module de communication présente en outre une antenne (240) et un module radio (260), dans lequel l'antenne (240) est reliée au module radio (260), et dans lequel le module radio (260) est configuré pour recevoir du contrôleur (215) de l'ensemble (200) une propriété de module radio sélectionnée par le contrôleur (215).

11. Capteur (100) présentant un module de communication (130) selon la revendication précédente, dans lequel le capteur (100) présente en outre une structure de capteur (110, 120, 125) qui est **caractérisée par** un matériau de boîtier dont dépend la sélection de la propriété de module radio.

12. Procédé (300) de sélection d'une propriété de module radio pour un capteur de la technique d'automatisation (100) selon la revendication précédente, dans lequel la propriété de module radio dépend d'une structure de capteur (110, 120, 125), dans lequel le contrôleur (215) sélectionne (306) la propriété de module radio en fonction de la structure de capteur (110, 120, 125), la structure de capteur (110, 120, 125) étant **caractérisée par** un matériau de boîtier ; et dans lequel le contrôleur (215) détermine une propriété électrique du matériau de boîtier pour sélectionner la propriété de module radio.

13. Élément de programme qui, lorsqu'il est exécuté sur le contrôleur (215) de l'ensemble selon l'une des revendications 1 à 9, met en œuvre les étapes du procédé selon la revendication 12.

14. Utilisation d'un ensemble selon l'une des revendications 1 à 9 pour sélectionner une propriété de module radio pour un capteur de niveau de remplissage, un capteur de niveau limite, un capteur de débit ou un capteur de pression.
